# EUROPEAN PATENT APPLICATION

(11) **EP 1 647 357 A1**
(43) Date of publication of application: **19.04.2006**
(21) Application number: 04077827.6
(22) Date of filing: 13.10.2004
(51) Int. Cl.: B23Q 11/00, B23Q 17/24, B25J 19/02, F16P 3/14

(54) **Method and device for observing and securing a danger zone of a machine or the like**

(71) Applicant: Robosoft N.V., 8900 Ieper (BE)
(72) Inventor: Coopman, José André Cornelius, 8900 Ieper (BE)
(74) Representative: Donné, Eddy

(57) **Abstract**

Method for securing a machine or the like, more particularly in order to prevent accidents, in the case of an illicit presence of a person (11) or object in a danger zone of the machine (2) or the like, characterised in that it mainly consists of the foregoing recording of images of the above-mentioned danger zone (7) for all possible situations during the normal working of the machine (2) in which a hazardous situation may occur; in storing these images in a memory (9); in recording images of the danger zone (7) while the machine (2) is in use; in comparing the recorded images to the images in the memory (9); and in generating a signal when the recorded images differ from the images in the memory (9).

## Description

The present invention concerns a method for securing a machine or the like.

Many industrial machines, such as edge presses, automatic wood saws, automated welding installations and the like, imply risks as far as the safety of the employers is concerned.

In order to reduce the risk of industrial accidents when working on and with such machines or the like, a device for securing this machine can be provided, which device can interrupt the operation of the machine in case of a possible hazardous situation.

By the term machine or the like is not only meant an industrial production machine, but all devices, for example automatic garage doors, gas burners, sprinkler installations or chemical reactors, which may be dangerous in the case of an illicit presence of a person or object in the danger zone of this device.

Devices for securing a machine or the like are already known, whereby this device consists of a transmitter, a receiver and a control unit, whereby the transmitter emits one or several beams which are detected by the receiver.

When these beams do not reach the receiver, or only to a limited extend, the control unit makes sure the machine concerned is switched off.

A disadvantage of these known devices for securing a machine is that the above-mentioned transmitter and receiver can only control a very limited space, whereas for example an edge press comprises a large danger zone.

Another disadvantage is that the presence of dust in or around the danger zone can diverge the light beams which are transmitted by the transmitter, which beams, as a consequence, are not detected by the receiver or only to a limited extend, such that there may be needless interruptions in the working of the secured machine.

The present invention aims to remedy the above-mentioned and other disadvantages.

To this end, the invention concerns a method for securing a machine or the like, more particularly in order to prevent accidents, in the case of an illicit presence of a person or object in a danger zone of the machine, whereby this method mainly consists of the foregoing storage of images of the above-mentioned danger zone in a memory for all possible situations during the normal working of the machine in which a hazardous situation may occur; in recording images of the danger zone while the machine is in use; in comparing the recorded images to the images in the memory; and in generating a signal when the recorded images differ from the images in the memory.

An advantage of the method according to invention for securing a machine or the like is that the image sensor can cover a relatively large area, such that the whole danger zone will be definitely secured.

Another advantage of this method is that, in a dusty environment, the effect of dust in the danger zone on the image sensor is less large, such that the number of false error messages is reduced.

The invention also concerns a device for securing a machine or the like according to the above-described method, which device consists of an image sensor; an image processor comprising a memory and a processor; and a control unit.

The device may also comprise an alarm device.

The image sensor is preferably sensitive to all light frequencies from infrared to ultraviolet and to coherent or incoherent light beams.

The device for securing a machine or the like preferably also comprises a light source.

In order to better explain the characteristics of the method and the device according to the invention for securing a machine or the like, the following preferred embodiments of such a device and of the method applied thereby are described as an example only without being limitative in any way, with reference to the accompanying drawings, in which:
figure 1 schematically represents a machine which is secured with a device according to the invention;
figure 2 represents a view according to arrow F2 in figure 1;
figure 3 represents a view as in figure 2, but during another phase of the work cycle of the above-mentioned machine;
figure 4 represents a view as in figure 2, but when a hazardous situation occurs; and
figure 5 represents a variant of figure 1.

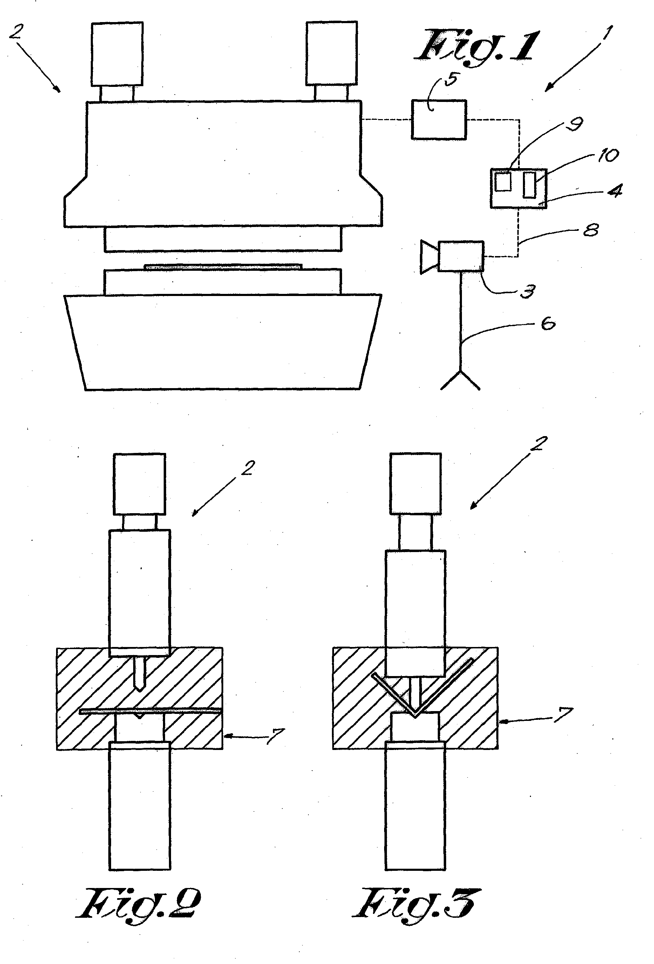

Figures 1 to 4 represent a device 1 which is set up in order to secure a machine 2 which in this case is an edge press, by way of example, for edging steel plates.

The device 1 comprises an image sensor 3, for example in the shape of a camera; an image processor 4; and a control unit 5.

The image sensor 3, which in this case is fixed on a stand 6, is directed towards a danger zone 7 of the machine 2 and is electrically connected to the image processor 4, by means of a guide 8.

The image processor 4 comprises a memory 9 and a processor 10, and is further connected to the control unit 5, also by means of a guide 8, which control unit 5 is in turn connected to the machine 2 by means of a guide 8.

It is clear that the connection between the different parts of the device 1, namely the image sensor 3, the image processor 4 and the control device 5, must not necessarily be provided for by means of a guide 8, but that also other provisions for transmitting signals, for example by m e a n s of infrared radiation, can be applied.

The above-mentioned device 1 makes it possible to secure a machine 2 in a very simple and efficient manner according to the method of the device 1 described hereafter.

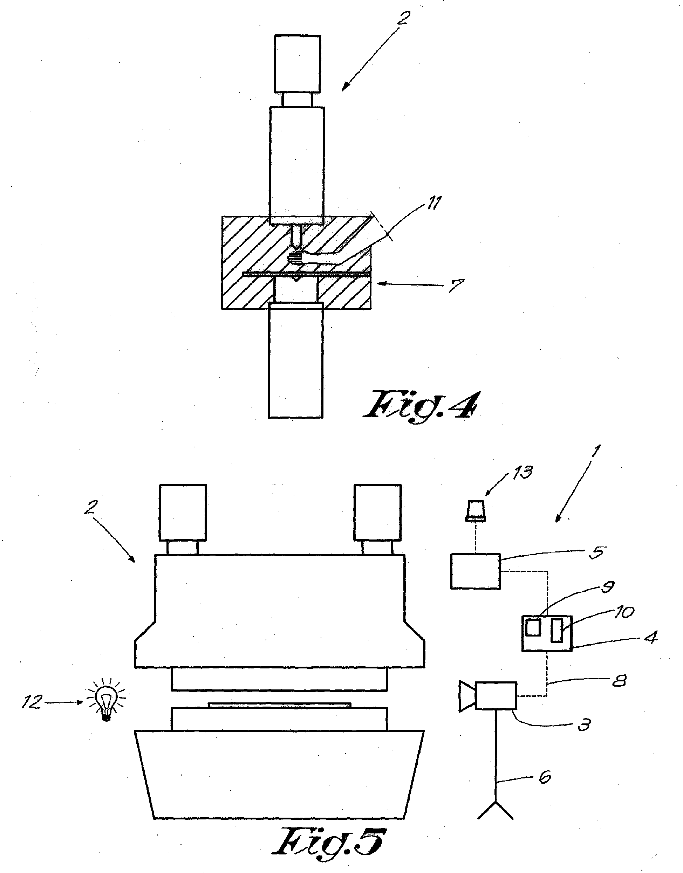

During a preparatory phase, when the device 1 is put into service, images of the above-mentioned danger zone 7 are first taken for any possible situation, for example those represented in figures 2 and 3, during the normal working of the machine 2.

The recorded images are transmitted to the image processor 4, processed by the processor 10 and recorded in the memory 9. These recorded images serve as a reference for securing the machine 2 during the later use of this machine 2.

In view of said securing, the images which are recorded by the image sensor 3 are transmitted directly to the image processor 4, where the images are processed first by the processor 10 and are then compared to the reference images from the memory 9.

If the recorded images differ from the images in the memory 9, for example due to the presence of a person 11 or a strange object, as represented in figure 4, a signal is generated and transmitted to the control unit 5, which then immediately stops the machine 2 or brings it back to a safe state, in this case to its original state, so that a possible hazardous situation can be anticipated.

Figure 5 represents a variant of figure 1, in which a light source 12 has been provided to improve the quality of the images which are recorded by the image sensor 3, such that also the security is tightened.

In this variant has also been built in an alarm device 13 in the form of a siren, a flashing light or the like which is controlled by the control unit 5 and which can warn the users of the machine 2 in case of danger, for example when they move into the danger zone 7.

Naturally, the light source 12 can be arranged in different positions, and illuminate the danger zone 7 directly and/or indirectly, whereby a direct illumination with a light source 12 on the opposite side of the danger zone 7 and directed to the image sensor 3 will increase the contrast in the recorded images.

The device 1 in this case only controls the alarm device 13, but it is not excluded that the alarm device 13 as well as the machine 2 itself are directed by it.

It is clear that several image sensors 3, as well as several light sources 12 can be applied to optimally secure the danger zone 7 concerned.

It is also clear that the image sensor 3 must not necessarily be fixed on a stand 6, for example if the machine 2 comprises a moving arm, the image sensor 3 can be mounted on this arm.

The control of the machine 2 by the device 1 must not necessarily result from a possible hazardous situation. Also in case of an abnormal operation, for example if the product 13 to be processed is positioned wrong, whereby the machine 2 itself can be damaged as well, such a device 1 according to the invention may be useful.

The present invention is by no means limited to the embodiments given as an example and represented in the accompanying drawings; on the contrary, such a device according to the invention can be made in different variants while still remaining within the scope of the invention.

## Claims

1. Method for securing a machine or the like, more particularly in order to prevent accidents, in the case of an illicit presence of a person (11) or object in a danger zone of the machine (2) or the like, **characterised in that** it mainly consists of the foregoing storage of images of the above-mentioned danger zone (7) in a memory for all possible situations during the normal working of the machine (2) in which a hazardous situation may occur; in recording images of the danger zone (7) while the machine (2) is in use; in comparing the recorded images to the images in the memory (9) ; and in generating a signal when the recorded images differ from the images in the memory (9).

2. Method for securing a machine or the like according to claim 1, **characterised in that**, in order to record the images, at least one image sensor (3) is used.

3. Method for securing a machine or the like according to claim 1 or 2, **characterised in that** the generated signal is used to stop the machine (2) and/or to bring it back to a safe state.

4. Method for securing a machine or the like according to any one of the preceding claims, **characterised in that** the generated signal is used to activate an alarm device (13).

5. Method for securing a machine or the like according to any one of the preceding claims, **characterised in that** at least one light source (12) is used for recording images.

6. Device for securing a machine or the like which can apply the method according to any one of the preceding claims, **characterised in that** it consists at least of an image sensor (3); an image processor (4) which comprises a memory (9) and a processor (10); and a control unit (5).

7. Device for securing a machine or the like according to claim 6, **characterised in that** at least one of the image sensors (3) is a camera or something similar.

8. Device for securing a machine or the like according to claim 6 or 7, **characterised in that** it comprises at least one light source (12).

9. Device for securing a machine or the like according to claim 8, **characterised in that** the light source (12), in relation to the danger zone (7), is diametrically opposed to the sensor (3), whereby the light source (12) sheds light on the image sensor (3).

10. Device for securing a machine or the like according to any one of claims 6 to 9, **characterised in that** the image sensor (3) is sensitive to all light frequencies from infrared to ultraviolet.

11. Device for securing a machine or the like according to any one of claims 6 to 10, **characterised in that** the image sensor (3) is sensitive to coherent light beams.

12. Device for securing a machine or the like according to any one of claims 6 to 10, **characterised in that** the image sensor (3) is sensitive to incoherent light beams.
